Europäisches Patentamt

(19) European Patent Office

Office européen des brevets

(11) **EP 1 346 960 A1**

(12) **EUROPEAN PATENT APPLICATION**
published in accordance with Art. 158(3) EPC

(43) Date of publication:
**24.09.2003 Bulletin 2003/39**

(51) Int Cl.7: **C03C 3/068**

(21) Application number: **01272826.7**

(86) International application number:
**PCT/JP01/11178**

(22) Date of filing: **20.12.2001**

(87) International publication number:
**WO 02/053506 (11.07.2002 Gazette 2002/28)**

(84) Designated Contracting States:
**AT BE CH CY DE DK ES FI FR GB GR IE IT LI LU MC NL PT SE TR**

(30) Priority: **28.12.2000 JP 2000400446**

(71) Applicant: **MATSUSHITA ELECTRIC INDUSTRIAL CO., LTD.**
**Kadoma-shi, Osaka 571-8501 (JP)**

(72) Inventors:
• **FURUKAWA, Shigeo**
**Moriguchi-shi, Osaka 570-0074 (JP)**

• **HIRAKA, Masahiro**
**Ikoma-shi, Nara 630-0141 (JP)**
• **YAMADA, Shigeki**
**Kyoto-shi, Kyoto 612-8238 (JP)**
• **HIGASHIYAMA, Yoshiki**
**Nara-shi, Nara 631-0804 (JP)**

(74) Representative: **Balsters, Robert et al**
**Novagraaf SA**
**25, Avenue du Pailly**
**1220 Les Avanchets - Geneva (CH)**

(54) **GLASS FOR MOLDED LENS**

(57)    Mold lens glass including $B_2O_3$, $SiO_2$, $La_2O_3$, ZnO, BaO, and CaO, wherein a composition in weight ratio is: $B_2O_3$ is 25 % to 35 % by weight, $SiO_2$ is 1 % to 7 % by weight, where a total ampount of $B_2O_3$ and $SiO_2$ is 30 % to 40 % by weight. A content of $La_2O_3$ is 12 % to 20 % by weight, and a total amount of ZnO, BaO and CaO is 40 % to 55 % by weight. By using the mold lens glass of the present invention, it is possible to obtain mold lens glass having high refractive index, excellent water resistance and a stable glassy state.

**Description**

TECHNICAL FIELD

The present invention relates to a glass composition for a lens which can be molded by hot pressing of glass preform between metal molds with curved surfaces of a lens, particularly to glass for mold lens having high refractive index and low dispersion.

BACKGROUND ART

Conventionally, a composition of optical glass has been determined to obtain necessary characteristics such as refractive index, Abbe's number, and chemical durability, without taking into account the lowering of glass transition temperature (Tg).

On the other hand, hot press molding technologies for a mold lens have been developed since around 1983, which requires no polishing and is capable of accurate control of a surface shape and surface roughness equivalent to those of a polished surface.

Glass for such mold lens is used for a pickup lens of an optical disk apparatus at present.

A mold lens can be obtained by pressing for a long time (about 20 sec.) at a temperature 10 to 20°C higher than a flexure temperature of glass, using accurately ground and polished metal molds.

The metal mold surface is coated with a thin film of diamond-like carbon (DLC) or TiCN in order to release the mold lens from the metal molds.

The glass used for mold lens glass is required to be low in Tg for prolonging the life of the mold coating and reducing the cost, while it is desirable to be high in refractive index to reduce aberration of lens such as spherical aberration. That is, mold lens glass is required to be low in Tg and high in refractive index ($n_d$).

Further, in a case of glass which is easily crystallized, it is difficult to reliably produce an excellent lens, and therefore, a glass composition that hardly crystallizes is required.

Also, in a case of glass having poor water resistance, glass surface reacts with moisture in air, causing whitening of glass surface, and therefore, the water resistance of glass is required to be high enough.

The present invention is intended to provide mold lens glass having excellent water resistance, low Tg and high refractive index ($n_d$) and is hard to crystallize during a production process of glass.

DISCLOSURE OF THE INVENTION

Mold lens glass of the present invention includes $B_2O_3$, $SiO_2$, $La_2O_3$, ZnO, BaO, and CaO. A composition includes 25 % to 35 % by weight of $B_2O_2$ and 1 % to 7 % by weight of $SiO_2$. It includes 30 % to 40 % total weight of $B_2O_3$ and $SiO_2$, 12% to 20% by weight of $La_2O_3$, and 40% to 55% by total weight of ZnO, BaO and CaO.

DETAILED DESCRIPTION OF THE INVENTION

The mold lens glass (hereinafter referred to as "glass") in the preferred embodiment of the present invention will be described in the following.

First Preferred embodiment

Guaranteed grade reagents (JIS) of $H_3BO_3$, $SiO_2$, $La_2O_3$, ZnO, BaO and CaO were mixed to have a composition by which the present invention is characterized, and then mixture is melted at 1350°C for 20 minutes.

Next, molten glass is poured onto metal molds previously heated up to glass transition temperature Tg and is vitrified.

Subsequently, glass thus obtained is cooled in an annealing furnace, at a cooling speed of 10 °C/h from Tg to Tg - 40 °C and, then, at 100°C/h to eliminate heat stress.

Next, the glass is formed into a rectangular parallelpiped shape of 15 mm x 15 mm x 5 mm, and every surface are polished, followed by a measurement of refractive index and Abbe's number.

Further, a part of the glass is crushed into powder, and differential thermal analysis (DTA) is performed to obtain Tg, Ts, and liquid-phase temperature ($T_L$).

The vitrification ranges of glass thus obtained will be explained with reference to Table 1.

Glass compositions based on ($SiO_2$, $B_2O_3$) - $La_2O_3$ - (BaO, ZnO, CaO) and their characteristics are shown in Table 1.

Here, β values are calculated as parameters that show the stability of glass, that is, the extent of being hard to crystallize. The β values are calculated by the following equation, and the larger the value, the higher the stability of the glass.

$$\beta = (T_c - Tg)/(T_L - T_c)$$

where Tg is glass transition temperature, $T_c$ is crystallization temperature, and $T_L$ is liquid-phase temperature.

Also, the refractive index, Abbe's number and characteristic temperature of each glass are measured.

Abbes's-number νd is calculated by the following equation, and the larger the Abbe's number, the less the dispersion of the glass.

$$\nu d = (n_d -1)/(n_F - n_c)$$

where nF is refractive index at F line (wavelength 486.1 nm), $n_c$ is refractive index at C line (wavelength 656.3 nm), and $n_d$ is refractive index at d line (wavelength 587.6 nm).

Table 1 shows that the glass is unstable because the β value is as small as not more than 2 when the total amount of $B_2O_3$ and $SiO_2$, which is glass forming oxide, is about 25% by weight. Also, it is shown that Tg is very high when the total amount of $B_2O_3$ and $SiO_2$ exceeds 40% by weight, and is not suitable for mold lens glass.

Further, it is found that the stability of glass can be improved by mixing and substituting divalent metal oxide component (BaO) with other components (ZnO, CaO) .

Table 1

| No. | $B_2O_3$ | $SiO_2$ | $La_2O_3$ | BaO | ZnO | CaO | Tg (C°) | $T_C$ (C°) | $T_L$ (°C) | β | $n_d$ |
|---|---|---|---|---|---|---|---|---|---|---|---|
| 1 | 30 | – | 15 | 55 | – | – | 550 | 614 | 1029 | 0.154 | – |
| 2 | 30 | – | 20 | 50 | – | – | 565 | 643 | 1023 | 0.205 | – |
| 3 | 30 | – | 25 | 45 | – | – | 570 | 669 | 1023 | 0.280 | – |
| 4 | 35 | – | 10 | 55 | – | – | 568 | 644 | 981 | 0.226 | – |
| 5 | 35 | – | 15 | 50 | – | – | 577 | 670 | 979 | 0.301 | 1.671 |
| 6 | 35 | – | 20 | 45 | – | – | 574 | 700 | 958 | 0.488 | 1.678 |
| 7 | 35 | – | 25 | 40 | – | – | 593 | 747 | 941 | 0.794 | 1.686 |
| 8 | 40 | – | 10 | 50 | – | – | 593 | 792 | 909 | 1.701 | 1.651 |
| 9 | 40 | – | 20 | 40 | – | – | 599 | 737 | 873 | 1.015 | 1.673 |
| 10 | 40 | – | 30 | 30 | – | – | 613 | 751 | 913 | 0.852 | 1.684 |
| 11 | 50 | – | 10 | 40 | – | – | 600 | 820 | 923 | 2.136 | 1.627 |
| 12 | 50 | – | 40 | 10 | – | – | 644 | 770 | 980 | 0.600 | – |
| 13 | 55 | – | 10 | 35 | 50 | – | 599 | 802 | 960 | 1.285 | 1.609 |
| 14 | 35 | – | 15 | – | 50 | – | 542 | 696 | 948 | 0.611 | 1.693 |
| 15 | 35 | – | 15 | – | – | 50 | Crystalized | – | – | – | – |
| 16 | 35 | – | 15 | 40 | 10 | – | 560 | 796 | 852 | 4.214 | 1.680 |
| 17 | 35 | – | 15 | 30 | 20 | – | 547 | 740 | 803 | 3.063 | 1.685 |
| 18 | 35 | – | 15 | 20 | 30 | – | 541 | 798 | 837 | 6.590 | 1.689 |
| 19 | 35 | – | 15 | 10 | 40 | – | 534 | 693 | 867 | 0.914 | 1.692 |
| 20 | 30 | – | 20 | – | 50 | – | 536 | 648 | 822 | 0.644 | 1.717 |
| 21 | 30 | – | 25 | – | 45 | – | 534 | 664 | 861 | 0.660 | 1.725 |
| 22 | 25 | 10 | 15 | 20 | 30 | – | 554 | 711 | 823 | 1.402 | 1.689 |

Table 1 (continued)

| No. | $B_2O_3$ | $SiO_2$ | $La_2O_3$ | BaO | ZnO | CaO | Tg (C°) | $T_C$ (C°) | $T_L$ (°C) | β | $n_d$ |
|---|---|---|---|---|---|---|---|---|---|---|---|
| 23 | 20 | 15 | 15 | 20 | 30 | _ | 558 | 836 | 940 | 2.673 | 1.689 |
| 24 | 30 | 5 | 15 | 20 | 20 | 10 | 552 | 810 | 906 | 2.688 | 1.689 |
| 25 | 25 | 10 | 15 | 20 | 20 | 10 | 557 | 805 | 889 | 2.952 | 1.689 |
| 26 | 20 | 15 | 15 | 20 | 20 | 10 | 556 | 732 | 819 | 2.023 | 1.689 |
| 27 | 21 | 15 | 15 | 20 | 20 | 10 | 570 | 740 | 793 | 3.208 | 1.687 |
| 28 | 15 | 10 | 15 | 24 | 24 | 12 | 532 | 772 | 1027 | 0.941 | _ |
| 29 | 20 | 5 | 15 | 24 | 24 | 12 | 527 | 760 | 1012 | 0.925 | _ |
| 30 | 15 | 15 | 15 | 22 | 22 | 11 | 540 | 812 | 921 | 2.495 | 1.692 |
| 31 | 20 | 10 | 15 | 22 | 22 | 11 | 532 | 803 | 916 | 2.398 | 1.701 |
| 32 | 25 | 5 | 15 | 22 | 22 | 11 | 528 | 795 | 910 | 2322 | 1.713 |
| 33 | 25 | 15 | 15 | 18 | 18 | 9 | 623 | 853 | 928 | 3.067 | 1.678 |
| 34 | 30 | 10 | 15 | 18 | 18 | 9 | 614 | 827 | 901 | 2.878 | 1.686 |
| 35 | 35 | 5 | 15 | 18 | 18 | 9 | 601 | 802 | 876 | 2.716 | 1.691 |
| (Composition: % by weight) | | | | | | | | | | | |

Second Preferred embodiment

The second preferred embodiment of the present invention will be described in the following.

Glass is manufactured with the ratios of BaO, ZnO, and CaO varied where the glass compositions are set as $B_2O_3$ = from 30 % to 31 % by weight, $SiO_2$ = 5 % by weight, and $La_2O_3$ = 15% by weight.

The water resistance of glass obtained is measured by the following method. That is, glass powder equivalent to specific gravity (constant volume) and having particle diameter of from 250 μm to 420 μm is boiled one hour in boiling water, followed by a measurement of the decrease in weight (Dw) of the glass. The results are shown in Table 2.

Table 2

| No. | $B_2O_3$ | $SiO_2$ | $La_2O_3$ | BaO | ZnO | CaO | $n_d$ | Dw (%) |
|---|---|---|---|---|---|---|---|---|
| 1 | 30 | 5 | 15 | 20 | 20 | 10 | 1.689 | 0.532 |
| 2 | 30 | 5 | 18 | 18.8 | 18.8 | 9.4 | 1.696 | 0.316 |
| 3 | 30 | 5 | 17 | 19.2 | 19.2 | 9.6 | 1.701 | 0.439 |
| 4 | 32 | 5 | 15 | 19.2 | 19.2 | 9.6 | 1.695 | 0.361 |
| 5 | 31 | 5 | 17 | 18.8 | 18.8 | 9.4 | 1.691 | 0.478 |
| 6 | 31 | 5 | 15 | 14.7 | 29.4 | 4.9 | 1.689 | 0.038 |
| 7 | 31 | 5 | 15 | 9.8 | 29.4 | 9.8 | 1.687 | 0.014 |
| 8 | 31 | 5 | 15 | 4.9 | 34.3 | 9.8 | 1.691 | 0.055 |
| (Composition: % by weight) | | | | | | | | |

As shown in Table 2, it is clear that the water resistance of the glass can be improved by optimizing the component ratio of divalent metal oxide.

INDUSTRIAL APPLICABILITY

As is apparent in the preferred embodiments of the present invention, the present invention is able to provide mold lens glass which has low Tg, high refractive index ($n_d$), is hard to crystallize during the production process, and has excellent water resistance.

**Claims**

1.  Mold lens glass including:

    25% to 35% by weight of $B_2O_3$ and 1% to 7% by weight of $SiO_2$, a total amount of which being 30% to 40% by weight; and
    12% to 20% by weight of $La_2O_3$, a total amount of ZnO, BaO and CaO being 40% to 55% by weight.

2.  The mold lens glass of claim 1, wherein weight ratios of said ZnO, BaO and CaO are;

    ZnO : BaO : CaO = 25 to 35 : 5 to 16 : 4 to 11.

EP 1 346 960 A1

## INTERNATIONAL SEARCH REPORT

| | International application No. |
| --- | --- |
| | PCT/JP01/11178 |

**A. CLASSIFICATION OF SUBJECT MATTER**
Int.Cl⁷ C03C 3/068

According to International Patent Classification (IPC) or to both national classification and IPC

**B. FIELDS SEARCHED**

Minimum documentation searched (classification system followed by classification symbols)
Int.Cl⁷ C03C 3/00~3/32

Documentation searched other than minimum documentation to the extent that such documents are included in the fields searched
Jitsuyo Shinan Koho        1926-1996   Toroku Jitsuyo Shinan Koho   1994-2002
Kokai Jitsuyo Shinan Koho   1971-2002   Jitsuyo Shinan Toroku Koho   1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2001-72432 A (Minolta Co., Ltd.), 21 March, 2001 (21.03.2001), Claims; working example   (Family: none) | 1~2 |
| A | JP 8-59282 A (Nikon Corporation), 05 March, 1996 (05.03.1996), Claims; working example   (Family: none) | 1~2 |
| A | WO 00/21895 A1 (Kabushiki Kaisha Ohara), 20 April, 2000 (20.04.2000), Claims; working example & JP 2000-119036 A Claims; working example | 1~2 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 February, 2002 (26.02.02) | 05 March, 2002 (05.03.02) |

| Name and mailing address of the ISA/ Japanese Patent Office | Authorized officer |
| --- | --- |
| Facsimile No. | Telephone No. |

Form PCT/ISA/210 (second sheet) (July 1992)

6